# EUROPEAN PATENT SPECIFICATION

(11) **EP 2 568 451 B1**
(45) Date of publication and mention of the grant of the patent: **07.05.2014**
(21) Application number: 11180844.0
(22) Date of filing: 12.09.2011
(51) Int. Cl.: G07F 11/04, G07F 11/58, B65G 1/06

(54) **Means for conveying articles from a shelf of an automatic store or vending machine to a carriage and/or from the carriage to the shelf**
Mittel zum Transportieren von Artikeln aus einer Ablage einer automatischen Lagerungs- oder Verkaufsmaschine an einen Träger und/oder vom Träger zur Ablage
Moyen pour transporter des articles depuis une étagère d'un magasin automatique ou d'un distributeur vers un chariot et/ou du chariot vers l'étagère

(43) Date of publication of application: 13.03.2013
(73) Proprietor: Astore, SIA, Riga, LV-1067 (LV)
(72) Inventor: Matorin, Al, 2107 Spilve (LV); Karins, Igors, 1069 Riga (LV); Lepins, Sergejs, 1021 Riga (LV)
(74) Representative: Fortuna, Jevgenijs

(56) References cited:
- DE-A1- 3 714 638
- DE-A1- 3 837 402
- DE-U1- 8 706 291
- FR-A1- 2 533 811
- GB-A- 800 747
- US-A- 1 955 959
- US-A- 2 583 471
- US-A- 3 075 659
- US-A- 3 954 192

## Description

### Technical Field

The invention relates to the field of vending machines and automated stores for the automated storage and retrieval of products.

### Prior Art

The document DE-A-3837402 discloses conveying means for conveying goods between a shelf and a carriage.

There are known different type automated devices (vending machines or automated stores) for automatically and without any human intervention, receiving into the device goods to be distributed or sold, arranging goods in the storing area, storing them, and then distributing or selling to users/customers.

There is known a vending machine (WO 2007009714) comprising a dispensing device of the single product for conveying the product from its storage area to a tray, which positions the product at the machine's opening, thus permitting its withdrawal by the user, wherein the dispensing device is composed of a frame, on which a pusher is mounted, which makes the selected product fall into the tray. The pusher is being placed on the frame from behind of the storage area and is susceptible to vertical sliding on the guides along the storage area. The pusher is equipped with a push plate having horizontal axis. After the user has selected the product, the pusher is being positioned from behind of the line of products containing the selected product (typically the products of the same type are arranged in the storage area in line - one after another). Then the pusher pushes ahead the whole line of products (or one product if there is only one product in particular place of the storage area) by the push plate. As a result the product falls from the storage area to the tray. When the product is totally contained in the tray the pushing action of the pusher is being stopped; the tray delivers the selected product at the machine's opening permitting its withdrawal by the user. The known dispensing device has a number of disadvantages. First of all, since the pusher pushes the whole line of products, it puts the products close one to another, eliminating spaces between them. As a result, after falling down of one product onto the collecting tray, the next product in line partially hangs down from the storage area, i.e. is being partially aside the edge of the storage area, such that due to small vibrations it can fall down onto the vending machine's floor thus not allowing sale of the product or even damaging the product. Secondly, while allowing unloading of the storage area, the known device does not allow automated loading the products into the storage area.

There is known a product vending machine (WO 2009001383) comprising: a plurality of racks divided by a plurality of crosspieces into respective holding compartments inside which deliverable products are stored; means for moving and delivering the products being movable at least along two mutually perpendicular directions and comprising a basket slidable along a guide which can travel linearly along at least one fixed slide at right angles to it. The means for moving and delivering the products comprise: a mechanism for the advancement of products, active in proximity to each holding compartment and being associated with one of the two crosspieces delimiting each holding compartment; a belt, running continuously round a pair of wheels being located at a front end and at a rear end of each crosspiece, rotatable around a respective axis; pushing element moved by said belt. The pushing element, transverse to the relative crosspiece, is movable between a plurality of operating positions ranging between a first position in which it is in proximity to the rear end of the crosspiece and a second position in which it is in proximity to the front end of the crosspiece; said pushing element being capable of pushing the products to make them advance towards the front end of the crosspiece. The disadvantage of the known device is that the pushing element pushes the whole line of products, putting the products close one to another. As a result, after falling down of one product onto the basket, the next product in line may be placed partially aside the edge of the rack, such that due to small vibrations it can fall down onto the vending machine's floor. Secondly, the known device does not allow loading the products into the rack without unlocking and opening of the wending machine.

Another type of known vending machine (EP 1961678 B1) instead of pushing element employs pulling element comprising a vacuum pump and a pipe airtightly connected to the pump. The pipe of such pulling element is being able to be positioned facing the selected product. As the pipe is positioned adjacent to the selected product, the pump is being switched on and the product - pulled to the pipe. The pipe is being pulled out thus pulling out the selected product to the collecting tray, which delivers the product to the opening of the vending machine. This system solves the problem of the products placed partially aside the edge of the rack, because the pulling element pulls only one product while other products arranged in the same line remain on their places. The main drawbacks of the known device are that it can be used only for conveying light-weight objects; also it is quite noisy due to operation of the vacuum pump.

There is known a distributor device for solid products in automatic vending machines (WO 2008000346), wherein the products are arranged aligned and adjacent to form a stack. Said distributor device facilitates extraction of single solid products from the stack, even when tightly packed. The first product from the stack is separated by means of a sheet, which creates a thrust action against one of the surfaces of the first product, completely sliding the first product from the stack. The sheet is realized in a flexible material in such a manner that, when the sheet slides forward to separate the first product, the sheet assumes a curved configuration and while during the following return stage, the sheet reassumes its flat configuration.

There are also known other types of means adapted for unloading products from a shelf of a vending machine, i.a. a bucket adapted for receiving a product and provided with a mechanism for moving the bucket to a front side of a product (EP 1993078 B1); a lift truck provided with means to enable movement of the lift truck along a work space as well as to operate a displacement of the lift truck in a vertical direction along a single work space of the work spaces (EP 1348646 B1). T.

There is known an automatic vending machine (application JP 2000-345570, publication No.: 2002-150396) comprising shelf provided with conveyor belt and a carriage provided with conveyor belt having four transversal rotation axis defining three segments of the carriage. The carriage is being movable in X and Y axis directions; the segments of the carriage can move in Z axis direction towards the shelf. The first end of the carriage, which is being able to be disposed in proximity to the shelf, is being provided with driving gear - a sun cogwheel (fixed on one transversal rotation axis of the carriage's conveyor belt), being engaged with driven gear - a planet cogwheel; the sun cogwheel and the planet cogwheel are being rotatably fixed by planet carrier. The shelf is being provided with cogwheel mounted on the shelf's conveyor belt input shaft. The carriage is being also provided with hooks being rocked by motors' driven cams and ensuring engagement of the planet cogwheel with the shelf's cogwheel. Upon engagement of the planet cogwheel with the shelf's cogwheel, the rotational movement is being transferred to the shelf's conveyor belt; as a result, the product on the shelf is being moved to the vending machine's product collecting opening. To ensure proper operation of the device, it is being provided with additional elements, such as carriage's conveyor belt guide pulleys and other. The main drawback of the known device is relative complexity of the mechanism. Also since the main load on the carriage is being applied to the conveyor belt, the carriage can be used only for carrying lightweight objects. Another disadvantage of the device is that it does not allow automatic loading the products into the shelf.

### Disclosure of Invention

Claim 1 discloses the present invention. Preferred embodiments are disclosed in claims 2-7.

The objective of the invention is to eliminate the drawbacks of the prior art and to design a device, which can be used for conveying different type and size products, including boxes and bottles of irregular shape, being arranged distantly or adjacent forming a stack, from the shelves to a product collecting opening of the automated store and for loading the products in the automated store through the product collecting opening and arranging these products on the shelves.

This objective is achieved by creating shelves comprising a passive conveyor (i.e. conveyor without a motor) adapted for storing goods and a carriage adapted for receiving goods from the shelf and deliver them to the automatic store's or vending machine's opening and to perform the opposite operation - to receive the goods from the machine's opening and deliver them to the respective shelf, the carriage is also being able to be disposed aligned and substantially co-planar with each of the shelves; the shelves are provided with gearing means for gearing with a driving means; the carriage comprises a conveyor (with a motor) and a driving means adapted for driving shelf's passive conveyor in both directions - from the carriage and towards the carriage.

Further, substance of the invention and its various embodiments are described by way of examples with references to the drawings.

### Brief Description of Drawings

Fig. 1 represents a schematic side view of the offered device;
Fig. 2 represents a general view of one embodiment of the offered device;

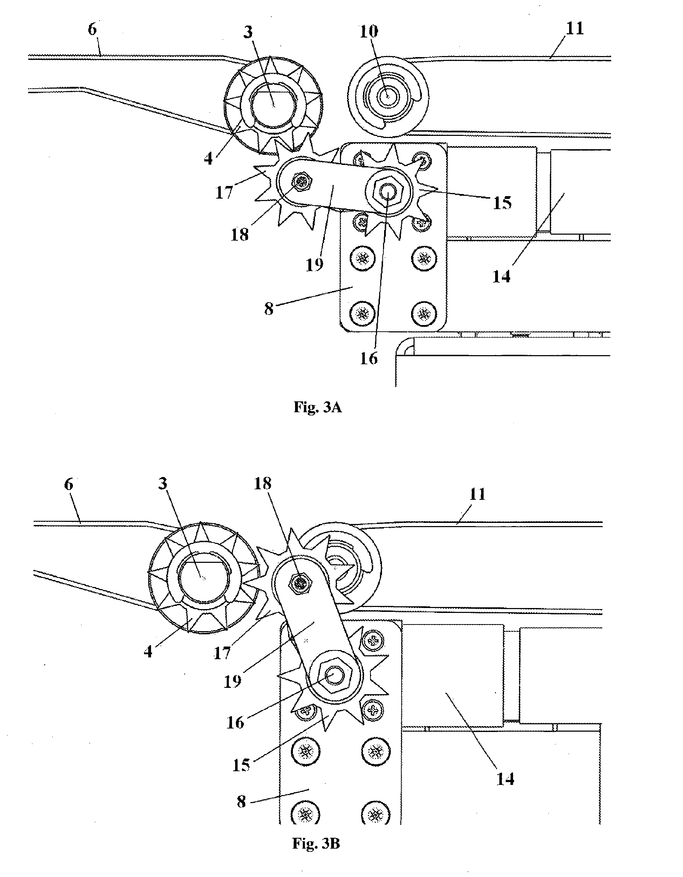

Fig. 3A represents a schematic side view of the gearing system between a carriage and a shelf of an automated store, where the gears are engaged to move a product from the shelf;
Fig. 3B represents a schematic side view of the gearing system between a carriage and a shelf of an automated store, where the gears are engaged to move a product to the shelf.

Shelves 1, on which various types of goods, are able to be disposed comprise a frame 2 having a first end and a second end situated opposite each other. The first end of the shelf's frame 2 is being provided with a rotatably and transversally mounted driveshaft 3 having a cogwheel 4 fixedly mounted on it. The driveshaft 3 may be provided with one or more cogwheels 4 fixedly mounted on it. The second end of the shelf's frame 2 is being provided with a rotatably and transversally mounted driven shaft 5. The shelves 1 further comprise a conveyor belt 6 mounted for rotation about the shafts (3 and 5), to be driven by the driveshaft 3.

The shelf 1 may contain one conveyor belt 6, or comprise a number of conveyor belts 6 mounted parallel to each other on the same shafts (3 and 5).

The carriage 7 is adapted for receiving products from the shelf 1 and deliver them to the automatic store's or vending machine's opening, thus enabling withdrawal of the purchased products by the user. Also the carriage is adapted to perform the opposite operation - to receive the goods from the machine's opening and deliver them to the respective shelf 1. The carriage 7 is being movable along at least two mutually perpendicular directions (preferably horizontal and vertical) in front of the shelves 1 and is being able to be disposed aligned and substantially co-planar with each of the shelves 1.

The carriage 7 comprise a frame 8 having a first end and a second end situated opposite each other. The first end of the carriage's frame 8 is being provided with a rotatably and transversally mounted driveshaft 9. The second end of the carriage's frame 8 is being provided with a rotatably and transversally mounted driven shaft 10. The carriage 7 further comprise a conveyor belt 11 mounted for rotation about the shafts (9 and 10) and adapted to be driven by the driveshaft 9. The driveshaft 9 is adapted to be driven by a motor 12. The carriage 7 further comprises a gearing system 13, comprising: a motor 14, a sun cogwheel 15, a driving shaft 16, a planet (satellite) cogwheel 17, a shaft 18 and a planet carrier 19. The sun cogwheel 15 is being fixedly mounted on the driving shaft 16, which is rotatably mounted in the carriage's frame 8. The sun cogwheel 15 should not be mounted on the shaft of the carriage's belt 11. The motor 14 is being operatably connected with the driving shaft 16. The sun cogwheel 15 is being engaged with the planet cogwheel 17, which is being rotatably mounted on the shaft 18. The sun cogwheel's shaft 16 and the planet cogwheel's shaft 18 are being mounted in the planet carrier 19 so that upon rotation of the sun cogwheel 15, the planet cogwheel 17 would rotate around its rotation axis and around the sun cogwheel's 15 rotation axis. The planet cogwheel 17 is mounted to be able to be engaged with the shelf's 1 cogwheel 4 such that the rotation movement can be transferred from the motor 14 to the driveshaft 3 of the shelf's conveyor belt 6.

To ensure the ability of the planet cogwheel 17 and the planet carrier 19 to freely rotate around the sun cogwheel's 15 rotation axis when the planet cogwheel 17 is not being engaged with the shelf's cogwheel 4 and to stop rotation of the planet cogwheel 17 and the planet carrier 19 around the sun cogwheel's 15 rotation axis when the planet cogwheel 17 is being engaged with the shelf's cogwheel 4, the sun cogwheel 15 and/or the planet carrier 19 should preferably be provided with means ensuring sufficient (low) coefficient of rotation, i.e. means ensuring engagement of the sun cogwheel 15 with the planet carrier 19 when the cogwheels (17 and 4) are not engaged and ensuring rotation (sliding) of the sun cogwheel 15 in the planet carrier 19 when the cogwheels (17 and 4) are being engaged. Such means ensuring the required coefficient of rotation can be a (friction) clutch facing or other equivalent means.

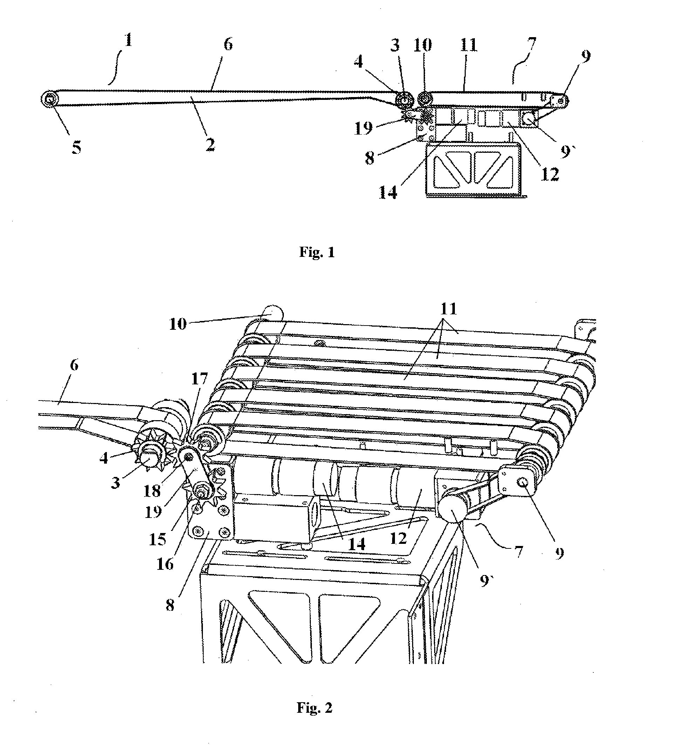

The carriage 7 may contain one conveyor belt 11, or comprise a number of conveyor belts 11 mounted parallel to each other on the same shafts (9 and 10). The motor 12 of the carriage's driveshaft may be operatably connected directly to one of the shafts (9 or 10), or through a drive from another shaft (9'), as shown in Fig. 1 and 2. The shelf 1 and the carriage 7 may be provided with more than one gearing systems 13 operating synchronously, e.g. on both sides of the adjacent ends of the shelf 1 and the carriage 7.

The device operates as follows. On command the carriage 7 is being positioned aligned and substantially co-planar with the shelf 1 with the selected product. The motor 14 is being operated thereby rotating the driving shaft 16 with the sun cogwheel 15. The sun cogwheel 15 being engaged with the planet cogwheel 17 rotates the planet carrier 19 into the same direction, but the planet cogwheel 17 - into the opposite direction. After traveling a segment of a circle the planet cogwheel 17 engages with the shelf's cogwheel 4. As a result the torsion torque from the motor 14 is being transferred to the shelf's cogwheel 4. The driveshaft 3 rotates the shelf's conveyor belt 6 where the selected product is located. Simultaneously the motor 12 is being operated thereby rotating the driveshaft 9, which star rotating the conveyor belt 11. The product is being moved from the shelf's conveyor belt 6 to the carriage's conveyor belt 11. The motor 12 stops operating, when the product is located on the designated place on the carriage 7. The motor 14 makes reverse (starts operating in the opposite direction). As a result the planet carrier 19 with the planet cogwheel 17 travels the segment of a circle in the opposite direction and the planet cogwheel 17 engages with the shelf's cogwheel 4 on its opposite side. Due to rotation of the planet cogwheel 17 in the opposite direction, the shelf's conveyor belt 6 rotates back, as a result the remaining products on the shelf 1 are being moved from the shelf's 1 edge to the predefined (programmed) distance. The motor 14 starts operating in the opposite direction for disengagement of the cogwheels (17 and 4). After that the carriage 7 delivers the unloaded selected product to a product collecting opening of the automated store.

The loading of the product or products from the carriage 7 to the shelf 1 is being performed similarly - the motor 14 starts operating thereby rotating the sun cogwheel 15, the planet carrier 19 and the planet cogwheel 17 in the required direction. After engagement of the cogwheels (17 and 4) the shelf's conveyor belt 6 starts rotation towards the second end of the shelf's frame 2. Simultaneously the motor 12 starts operating, thereby rotating the carriage's conveyor belt 11 in the direction towards the second end of the shelf's frame 2. As a result the product is being moved from the carriage 7 to the shelf 1. The distance between the products in the shelf 1 can be controlled by the order, speed and direction of rotation of the shelf's and carriage's conveyor belts (11 and 6).

## Claims

1. A system for conveying goods from a shelf (1) of an automatic store or vending machine to a carriage (7) and/or from the carriage (7) to the shelf (1), the system comprising: the shelf (1) and the carriage (7) being movable along at least horizontal and vertical direction in front of the shelves (1) and being able to be disposed aligned and substantially co-planar with the shelf (1), wherein the shelf (1) comprises a frame (2) having a first end and a second end situated opposite each other, a conveyor belt (6), a driveshaft (3), a cogwheel (4), a driven shaft (5); the first end of the frame (2) is provided with a rotatably and transversally mounted driveshaft (3) having a cogwheel (4) fixedly mounted on it, the second end of the frame (2) is being provided with a rotatably and transversally mounted driven shaft (5), the conveyor belt (6) is mounted for rotation about the shafts (3) and (5), to be driven by the driveshaft (3); the carriage (7) comprising a frame (8) having a first end and a second end situated opposite each other, a conveyor belt (11), a driveshaft (9), a motor (12), a driven shaft (10), and a gearing system (13), comprising: a sun cogwheel 15), a planet carrier (19), a planet cogwheel (17), a motor (14), a driving shaft 16, a shaft 18, the system **characterized in that** the second end of the carriage's frame (8) is being provided with a rotatably and transversally mounted driven shaft (10), the first end of the frame (8) is being provided with a rotatably and transversally mounted driveshaft (9) being connected to the motor (12) and adapted to be driven by it; the belt (11) is mounted for rotation about the shafts (9) (10) and adapted to be driven by the driveshaft (9); the sun cogwheel (15) is being fixedly mounted on the driving shaft (16), which is rotatably mounted in the carriage's frame (8), the motor (14) is being operatably connected with the driving shaft (16); the sun cogwheel (15) is being engaged with the planet cogwheel (17), which is being rotatably mounted on the shaft (18), the shafts (16) and (18) are being mounted in the planet carrier (19), so that upon rotation of the sun cogwheel (15), the planet cogwheel (17) rotates around its rotation axis and around the sun cogwheel's (15) rotation axis; the planet cogwheel (17) is mounted to be able to be engaged with the shelf's (1) cogwheel (4) such that the rotation movement can be transferred from the motor (14) to the driveshaft (3) of the belt (6).

2. The system according to claim 1, wherein the carriage (7) contains more than one conveyor belts (11) mounted parallel to each other for rotation about the shafts (9) and (10).

3. The system according to claim 1 or 2, wherein the shelf (1) contains more than one conveyor belts (6) mounted parallel to each other for rotation about the shafts (3) and (5).

4. The system according to any of the preceding claims, wherein the motor (12) of the carriage's driveshaft is being operatably connected to one of the shafts (9) or (10) through a drive from another shaft.

5. The system according to any of the preceding claims, wherein the sun cogwheel (15) and/or the planet carrier (19) is being provided with means ensuring sufficient coefficient of rotation, i.e. means ensuring engagement of the sun cogwheel (15) with the planet carrier (19) when the cogwheels (17) and (4) are not engaged and ensuring sliding of the sun cogwheel (15) in the planet carrier (19) when the cogwheels (17) and (4) are being engaged.

6. The system according to claim 5, wherein the means ensuring the required coefficient of rotation is clutch facing or other equivalent means.

7. The system according to any of the preceding claims, wherein the shelf (1) and the carriage (7) are being provided with more than one gearing system (13) adapted to operate synchronously.

## Patentansprüche

1. System für die Beförderung von Waren aus einem Regal (1) der automatischen Lagerung oder Verkaufsmaschine auf einen Wagen (7) und/oder vom Wagen (7) in das Regal (1) bestehend aus: Regal (1) und Wagen (7), die mindestens in horizontaler und vertikaler Richtung gegenüber dem Regal (1)verschiebbar sind und so angeordnet werden können, dass sie im Wesentlichen eine Ebene mit dem Regal (1) bilden, wobei das Regal (1) aus einem Rahmen (2) besteht, der ein erstes und zweites Endstück aufweist, die einander gegenüber angeordnet sind sowie aus einem Förderband (6), einer Antriebswelle (3), einem Zahnrad (4), einer Abtriebswelle (5), das erste Ende des Rahmens (2) mit einer drehbar und quer montierten Antriebswelle (3) ausgestattet, an der ein Zahnrad (4) fest montiert ist; das zweite Ende des Rahmens (2) ist mit einer drehbar und quer montierten Abtriebswelle (5) ausgerüstet; das Förderband (6) ist drehbar oberhalb der Wellen (3) und (5) montiert und wird von der Antriebswelle (3) angetrieben; der Wagen (7) ist mit einem Rahmen (8) bestehend aus einem ersten und einem zweiten Ende ausgerüstet, wobei sich die beiden Enden gegenüber stehen, einem Förderband (11), einer Antriebswelle (9), einem Motor (12), einer Abtriebswelle (10) und einem Getriebesystem (13) bestehend aus: Einem Sonnen-Zahnrad (15), einem Planetenträger (19), einem Planeten-Zahnrad (17), einem Motor 14), einer Antriebswelle (16), einer Welle (18). Das System ist **dadurch gekennzeichnet, dass** das zweite Ende des Wagenrahmens (8) mit einer drehbaren und quer montierten Abtriebswelle (10) und das erste Ende des Rahmens (8) mit einer drehbaren und quer montierten Antriebswelle (9) ausgerüstet ist, die am Motor (12) angeschlossen ist und von diesem angetrieben wird, das Förderband (11) oberhalb der Wellen (9) und (10) drehbar montiert ist und von der Antriebswelle (9) angetrieben wird; das Sonnen-Zahnrad (15) fest an der Antriebswelle (16) montiert ist, die drehbar am Rahmen (8) des Wagens montiert wird; der Motor (14) betriebsfähig mit der Antriebswelle (16) verbunden ist; das Zahnrad (15) in das Planeten-Zahnrad (17) eingreift, welches drehbar an der Welle (18) montiert ist, die Wellen (16) und (18) am Planetenträger (190) montiert sind, so dass sich bei Drehung des Sonnen-Zahnrads (15) das Planeten-Zahnrad (17) um seine Drehachse und um die Achse des Sonnen-Zahnrades (15) dreht; das Planeten-Zahnrad (17) so montiert ist, dass es in das Zahnrad (4) des Regals (1) eingreift, so dass die Drehbewegung vom Motor (14) auf die Antriebswelle (3) des Förderbandes (6) übertragen werden kann.

2. Das System gemäß Anspruch 1 ist **dadurch gekennzeichnet, dass** der Wagen (7) mehr als ein Förderband (11) enthält, das parallel zu anderen montiert ist und sich oberhalb der Wellen (9) und (10) dreht.

3. Das System gemäß Anspruch 1 oder 2 ist **dadurch gekennzeichnet, dass** das Regal (1) mehr als ein Förderband (6) enthält, das parallel zu anderen montiert ist und sich oberhalb der Wellen (3) und (5) dreht.

4. Das System gemäß den vorhergehenden Ansprüchen ist **dadurch gekennzeichnet, dass** der Motor (12) der Wagenantriebswelle betriebsbereit über einen Antrieb einer anderen Welle mit einer der Wellen (9) oder (10) verbunden ist.

5. Das System gemäß den vorhergehenden Ansprüchen ist **dadurch gekennzeichnet, dass** das Sonnen-Zahnrad (15) und/oder der Planetenträger (19) mit Vorrichtungen versehen sind, die einen ausreichenden Reibungskoeffizienten gewährleisten, d. h. Vorrichtungen, die das Eingreifen des Sonnen-Zahnrads (15) in den Planeten-Träger (19) sicherstellen, wenn die Zahnräder (17) und (4) nicht eingreifen, so dass das Gleiten des Sonnen-Zahnrades (15) im Planeten-Träger (19) gewährleistet ist, wenn die Zahnräder (17) und (4) eingreifen.

6. Das System gemäß Anspruch 5 ist **dadurch gekennzeichnet, dass** die Vorrichtungen, die für den erforderlichen Reibungskoeffizienten sorgen, aus einem Kupplungsbelag oder anderen äquivalenten Vorrichtungen bestehen.

7. Das System gemäß den vorherigen Ansprüchen ist **dadurch gekennzeichnet, dass** das Regal (1) und der Wagen (7) mit mehr als einem Getriebesystem (13) ausgerüstet sind, die synchron miteinander arbeiten.

## Revendications

1. Système pour transporter des marchandises d'une étagère (1) d'un magasin automatique ou distributeur automatique vers un chariot (7) et/ou du chariot (7) vers l'étagère (1), le système comprenant : l'étagère (1) et le chariot (7) étant mobiles le long d'au moins la direction horizontale et verticale à l'avant des étagères (1) et pouvant être disposés alignés et sensiblement coplanaires avec l'étagère (1), dans lequel l'étagère (1) comprend un châssis (2) ayant une première extrémité et une seconde extrémité, situées opposées l'une par rapport à l'autre, une bande transporteuse (6), un arbre de transmission (3), une roue dentée (4), un arbre entraîné (5) ; la première extrémité du châssis (2) est pourvue d'un arbre de transmission monté de façon rotative et transversalement (3) ayant une roue dentée (4) montée fixement dessus, la seconde extrémité du châssis (2) est pourvue d'un arbre de transmission monté de façon rotative et transversalement (5), la bande transporteuse (6) est montée en vue d'une rotation autour des arbres (3) et (5), pour être entraînée par l'arbre de transmission (3) ; le chariot (7) comprenant châssis (8) ayant une première extrémité et une seconde extrémité, situées opposées l'une par rapport à l'autre, une bande transporteuse (11), un arbre de transmission (9), un moteur (12), un arbre entraîné (10), et un système d'engrenages (13), comprenant : une roue dentée planétaire (15), un support satellite (19), une roue dentée satellite (17), un moteur (14), un arbre de transmission 16, un arbre 18, le système **caractérisé en ce que** la seconde extrémité du châssis (8) du chariot est pourvue d'un arbre entraîné monté de façon rotative et transversale (10), la première extrémité du châssis (8) est pourvue d'un arbre de transmission monté de façon rotative et transversale (9) étant connecté au moteur (12) et adapté pour être entraîné par celui-ci ; la bande (11) est montée en vus d'une rotation autour des arbres (9) (10) et adaptée pour être entraînée par l'arbre de transmission (9) ; la roue dentée planétaire (15) est montée fixement sur l'arbre de transmission (16), qui est monté rotatif dans le châssis (8) du chariot, le moteur (14) est relié de façon opérationnelle à l'arbre de transmission (16) ; la roue dentée planétaire (15) est en prise avec la roue dentée satellite (17), qui est montée rotative sur l'arbre (18), les arbres (16) et (18) sont montés dans le support satellite (19), de sorte que lors d'une rotation de la roue dentée planétaire (15), la roue dentée satellite (17) tourne autour de son axe de rotation et autour de l'axe de rotation de la roue dentée planétaire (15) ; la roue dentée satellite (17) est montée pour pouvoir être mise en prise avec la roue dentée (4) de l'étagère (1) de telle sorte que le mouvement de rotation peut être transféré du moteur (14) à l'arbre de transmission (3) de la bande (6).

2. Système selon la revendication 1, dans lequel le chariot (7) contient plusieurs bandes transporteuses (11) montées parallèles les unes aux autres en vue d'une rotation autour des arbres (9) et (10).

3. Système selon la revendication 1 ou 2, dans lequel l'étagère (1) contient plusieurs bandes transporteuses (6) montées parallèles les unes aux autres en vue d'une rotation autour des arbres (3) et (5).

4. Système selon l'une quelconque des revendications précédentes, dans lequel le moteur (12) de l'arbre de transmission du chariot est relié de façon opérationnelle à l'un des arbres (9) ou (10) par un entraînement d'un autre arbre.

5. Système selon l'une quelconque des revendications précédentes, dans lequel la roue dentée planétaire (15) et/ou le support satellite (19) sont pourvus d'un moyen assurant un coefficient de rotation suffisant, c'est-à-dire un moyen assurant la mise en prise de la roue dentée planétaire (15) avec le support satellite (19) lorsque les roues dentées (17) et (4) ne sont pas en prise et assurant un coulissement de la roue dentée planétaire (15) dans le support satellite (19) lorsque les roues dentées (17) et (4) sont en prise.

6. Système selon la revendication 5, dans lequel le moyen assurant le coefficient de rotation requis fait face à un embrayage ou autre moyen équivalent.

7. Système selon l'une quelconque des revendications précédentes, dans lequel l'étagère (1) et le chariot (7) sont pourvus de plus d'un système d'engrenages (13) adapté pour fonctionner de façon synchrone.
